# EUROPÄISCHE PATENTSCHRIFT

(11) **EP 0 917 750 B1**
(45) Veröffentlichungstag und Bekanntmachung des Hinweises auf die Patenterteilung: **28.11.2001**
(21) Anmeldenummer: 98916903.2
(22) Anmeldetag: 07.03.1998
(51) Int. Cl.: H01S 3/16, C30B 29/12, H01S 3/094, A61C 1/00, B23K 26/00

(54) **EINRICHTUNG ZUR ABLATION VON MATERIAL MIT HILFE VON LASERSTRAHLUNG**
DEVICE FOR ABLATING MATERIAL USING A LASER BEAM
DISPOSITIF POUR ENLEVER DE LA MATIERE A L'AIDE D'UN FAISCEAU LASER

(30) Priorität: 11.03.1997 DE 19709861
(43) Veröffentlichungstag der Anmeldung: 26.05.1999
(73) Patentinhaber: Vitcon Projectconsult GmbH, 07745 Jena (DE)
(72) Erfinder: JEGOROV, Valeriy, Jurevich, St.Petersburg, 195197 (RU); KORNEV, Aleksey Fyodorovich, St.Petersburg, 195274 (RU); MIRONOV, Igor Alexejevich, St.Petersburg, 197042 (RU); NIKITICHEV, Aleksey Alekseyevich, St.Petersburg, 199048 (RU); PETROVSKIY, Guriy Timofeyevich, St.Petersburg, 194021 (RU); POHL, Hans-Joachim, D-07743 Jena (DE); POKROVSKIY, Vasiliy Petrovich, St.Petersburg, 198215 (RU); REITEROV, Vladimir Michailovich, St.Petersburg, 193171 (RU); SOMS, Leonid Nikoljevich, St.Petersburg, 199397 (RU); STEINER, Rudolf, D-89081 Ulm (DE); STUPNIKOV, Vladimir Konstantinovich, St.Petersburg, 199100 (RU); TKACHUK, Aleksandra Mikhailovna, St.Petersburg, 199266 (RU)
(74) Vertreter: Niestroy, Manfred
(86) Internationale Anmeldenummer: EP9801349
(87) Internationale Veröffentlichungsnummer: WO9840940

(56) Entgegenhaltungen:
- EP-A- 0 444 949
- DE-A- 4 341 108
- MOROZOV A M ET AL: "Luminescence and induced emission lithium-erbium and lithium-holmium binary fluorides" OPTICS AND SPECTROSCOPY, Bd. 39, Nr. 3, September 1975, US, Seiten 338-339, XP002072238

## Beschreibung

### Gebiet der Erfindung

Die Erfindung bezieht sich auf eine Einrichtung zur Ablation von Material mit Hilfe von Laserstrahlung, insbesondere zur Bearbeitung biologischer Substanzen bei stomatologischer, endoskopischer, dermatologischer, orthorhinologischer und ähnlicher Behandlung, bestehend aus einem Pumplaser zur Erzeugung einer strahlungsanregenden Laserstrahlung und aus einem Laserkonverter zur Umwandlung der Pumplaserstrahlung in eine für die Bearbeitung vorgesehene Laserstahlung des Wellenlängenbereiches 3µm ±0,2µm, wobei der Laserkonverter in einem örtlich vom Pumplaser getrennten Bearbeitungskopf untergebracht ist und zur Übertragung der Laserstrahlung vom Pumplaser zum Laserkonverter eine faseroptische Einrichtung vorgesehen ist.

### Stand der Technik

Einrichtungen dieser Art gehören im Grundprinzip bereits zum Stand der Technik und sind beispielsweise aus DE OS 4341108 und aus EP 0530574 bekannt. So wird in der erstgenannten Veröffentlichung ein Zweistufen-Lasersystem zur Hartgewebechirugie beschrieben, bei dem die Strahlung eines ersten Lasers über einen optischen Wellenleiter zu einem zweiten, miniaturisierten Laserkristall ubertragen und dort zum koaxialen Pumpen dieses miniaturisierten Laserkristalles verwendet wird. Bei dem Pumpfaser handelt es sich um einen gepulsten Diodenlaser mit einer Emissionwellenlänge zwischen 900 nm und 1000 nm. Zur Übertragung der Pumplaserstrahlung wird eine Quarzglasfaser verwendet. Als zweiter, die eigentliche Wirkstrahlung abgebender Laser ist ein stabförmiger Laserkristall aus Erbium-Yttrium-Aluminium-Granat vorgesehen. Dieser YAG-Laser ist direkt in einem Handstück angeordnet, von dem aus die Wirkstrahlung auf das Zahnhartgewebe gerichtet werden kann, und zwar mit einer Wellenlänge im Bereich von 3 µm.

Für die Ausgestaltung des Pumplasers und des im Handstück eingeordneten Lasers werden drei voneinander abweichende Varianten angegeben. Dabei ist in einer ersten Variante die Verwendung eines Nd:YAG-Lasers mit etwa 2 Joule Pulsenergie und einer Pulsbreite von etwa 1 ms bis 50 ms vorgesehen. Diese YAG-Strahlung wird über eine Quarzglasfaser mit etwa 80 µm Kerndurchmesser zu einem Er:YAG-Laserkristall, der im Handstück eingeordnet ist, übertragen. Der Er:YAG-Kristall ist mit Ytterbium-Atomen dotiert. In einer zweiten Ausführungsform wird als Pumpstrahlungsquelle ein Nd:YAG-Laser benutzt, der eine Wellenlänge von 1,44 µm emittiert. Die 1,44 µm-Strahlung wird wiederum durch eine Quarzglasfaser zum Dentalhandstück übertragen und dort zum Pumpen eines Er:YGD-Laserkristalls verwendet. Die dritte Ausgestaltungsform sieht vor, zunächst eine Laserstrahlung der Wellenlänge 2,65 µm bis 2,69 µm zu erzeugen und diese Strahlung über extrem wasserfreie Quarzglasfasern in das Handstück zu übertragen und dort zum Pumpen eines Er:YAG-Laserkristalles zu nutzen.

Nachteilig bei allen vorgeschlagenen Lösungen sind die sehr hohen thermischen Verluste bei der Umsetzung der Pumpstrahlung in die Wirk- bzw. Arbeitsstrahlung, die dadurch ausgeglichen werden müssen, daß der Laserkristall im Handstück hinsichtlich seiner geometrischen Abmessungen relativ groß ausgeführt werden muß. Damit ergibt sich notwendigerweise, daß auch das Handstück, in das der Laserkristall integriert ist, große Abmessungen aufweist. Die Leistungsverluste erfordern außerdem, daß die Pumplaserstrahlung mit sehr hoher Intensität durch die optische Faser zum Handstück übertragen werden muß, was zur Überbeanspruchung der derzeit verfugbaren optischen Fasermaterialien führt und deren mögliche Nutzdauer in unerwünschtem Maße verringert.

In der zweiten der o.g. Veröffentlichung wird ein Verfahren und eine Vorrichtung zur Ablation biologischer Hartsubstanz, insbesondere Zahnhartsubstanz, vorgeschlagen, bei der ein kurzgepulster Laser im Wellenlängenbereich zwischen 2,78 µm und 2,94 µm verwendet wird. Außerdem sind Mlttel vorgesehen, die eine Glättung des Intensitätszeitverhaltens der Laserstrahlung bewirken, wodurch die Übertragbarkeit über die optischen Wellenleiter verbessert wird.

Der kurzgepulste Laser wird als Festkörperlaser im Handstück untergebracht. Als Laserkristall wird vornehmlich ein Cr-Er-dotierter YSGG-(Yttrium/Scandium/Gadulinium-Granat)-Kristall verwendet. Alternativ dazu wird vorgeschlagen, einen Er:YAG-Laser, der Strahlung im Wellenlängenbereich bei 2,96 µm emittiert, einzusetzen. Damit wird die Tatsache genutzt, daß durch den Ablationsprozeß während der Einwirkdauer der gepulsten Laserstrahlung selbst das Absorbtionsmaximum der Zielsubstanz sich dynamisch zu kürzeren Wellenlängen hin verschiebt. Bei der Bearbeitung von Zahnhartsubstanz z.B. verschiebt sich das Absorbtionsmaximum von wasserhaltiger Zahnhartsubstanz (Hydroxilapatit) von etwa 3 µm auf etwa 2,8 µm. Die Übertragbarkeit der Pumplaserstrahlung über optische Fasern zum Laserkristall im Handstück wird dadurch verbessert, daß in die Strahltaille des Lasers, entweder innerhalb oder außerhalb des Resonators, ein zusätzlicher Kristall mit lichtlinearen optischen Eigenschaften gestellt wird. Für diesen Kristall kommt der Veröffentlichung zufolge Lithium-Jodat oder Silber-Gallium-Sulfid zur Anwendung.

Zusätzlich sind optische Maßnahmen vorgesehen, um die Strahlungs- und damit die Leistungsverluste im Vergleich zum Stand der Technik zu reduzieren, wie z.B. die Bildung des Resonators aus 2 konfokalen Spiegeln, zwischen denen ein laseraktives Medium (Gas, Flüssigkeit, Festkörper oder Halbleiter) angeordnet ist. Der Kristall zur Glättung des Intensitätszeitverhaltens ist dabei innerhalb des Resonators angeordnet.

Nachteilig bei diesem Vorschlag sind immer noch hohe Leistungsverluste, wodurch die geometrischen Abmessungen des Laserkonverters und damit auch des Handstückes zu groß ausgeführt werden müssen, so daß damit weitere Anwendungsbereiche in der Medizin, wie z.B. die Ablation nicht nur auf stomatologischen Gebiet, sondern auch in der endoskopischen Lasertherapie, der Orthorhinologie und darüber hinaus nicht umfassend erschlossen werden könnten.

Die Erschließung dieser Gebiete ist jedoch wünschenswert, denn es ist bekannt, daß nicht nur biologische Hartsubstanz, wie Zahnhartsubstanz, sondern auch weitere Materialien mit Gehalt an H₂O und OH-Gruppen ein Maximum der Absorption von Strahlungen des Wellenlängenbereiches 2,8 µm bis 3,1 µm zeigen und mit Hilfe dieser Strahlung effektiv und ohne störende Nebeneffekte bearbeitbar sind, da die Laserbearbeitung bei 3 µm Wellenlänge gegenüber der Bearbeitung bei anderen Wellenlängen den entscheidenden Vorteil einer geringeren Eindringtiefe und damit einer geringeren störenden Auswirkung auf tieferliegende Schichten hat. Bei reduzierter geometrischer Größe des Handstückes sind über die genannten Gebiete der Humanmedizin hinaus weitere sehr nützliche Anwendungsmöglichkeiten in der Veterinärmedizin zu sehen und schließlich allgemein bei der Bearbeitung von sonstigen organischen und nichtorganischen Materialien unter schwierigen Zugangsbedingungen.

Es besteht also ein weitgehendes Bedürfnis, diese Anwendungsbereiche geratetechnisch zu erschließen. Mit den o.g. bereits vorhandenen Lösungen kann die anregende Laserstrahlung zwar durch verfugbare Quarzglasfasern über ausreichend große Längen zu einem Bearbeitungskopf übertragen werden; um nun aber die Einrichtung fur die vorgenannten Arbeitsgebiete umfassend nutzbar zu machen ist es notwendig, den Laserkristall im Laserkonverter bzw. den Bearbeitungskopf, in dem der Laserkonverter untergebracht ist, unter Beibehaltung einer genügend großen Laserleistung ausreichend klein herstellen zu können, was wiederum nur gelingt, wenn die Einrichtung eine sehr hohe Effektivität besitzt bzw. wenn die thermischen Verluste im Laserkonverter sehr klein gehalten werden können. Die Energieeffektivitat des Laserkristalls im Laserkonverter wird damit zur entscheidenden Charakteristik.

### Beschreibung der Erfindung

Der Erfindung liegt deshalb die Aufgabe zugrunde, eine Einrichtung zur Ablation von Material mit Hilfe von Laserstrahlung der oben beschriebenen Art derart weiterzubilden, daß durch eine Erhöhung der Effektivitat bei der Umsetzung der Pumplaserstrahlung in eine Strahlung mit der Wellenlange des Bereiches 3µm ±0,2µm der Einsatz kleinerer Laserkristalle im Laserkonverter möglich ist.

Erfindungsgemäß wird die Aufgabe für eine Einrichtung zur Ablation von Material mit Hilfe von Laserstrahlung dadurch gelöst, daß im Laserkonverter ein Metall-Holmium-Fluorid-Kristall mit einem Alkali- oder Erdalkali-Ion als Metall-Ion bei teilweisem Ersatz der Holmium (Ho)-lonen durch Praseodym (Pr)-lonen vorgesehen ist, und zwar eine der Verbindungen:
- Me (Ho₁₋ₓ Prₓ) F₄ mit Me einem Metall-Ion von Lithium (Li) oder Natrium (Na), mit F einem Fluor-Ion und mit Atomanteilen an Praseodym von x = 0,001 bis 0,03 oder
- Ba (Ho₁₋ₓ Prₓ)₂ F₈ mit Ba einem Barium-Ion, mit F einem Fluor-Ion und mit Atomanteilen an Praseodym von x = 0,0005 bis 0,015.

In vorteilhaften Ausgestaltungen der Erfindung ist vorgesehen, daß der Kristall des Pumplasers alternativ aus neodymdotiertem Yttrium-Aluminium-Granat Y₃Al₅O₁₂:Nd mit der Emissionswellenlänge der Pumplaserstrahlung von 1,12 µm, aus neodymdotiertem Yttrium-Orthoaluminat YAlO₃:Nd mit der Emissionswellenlänge der Pumplaserstrahlung von 1,08 µm oder als Pumplaser eine Laserdiode mit einer Emissionswellenlänge im Bereich 1,1 bis 1,15 µm vorhanden ist.

Eine weitere Lösung der Erfindung sieht vor, daß im Laserkonverter ein Metall-Holmium-Fluorid-Kristall mit einem Alkali- oder Erdalkali-lon als Metall-Ion bei teilweisem Ersatz der Holmium (Ho)-lonen durch Praseodym (Pr)-lonen und weiterhin bei teilweisem Ersatz der Holmium (Ho)-Ionen durch Ionen der Seltenen Erden Ytterbium (Yb) oder Yttrium (Y) vorgesehen ist, und zwar eine der Verbindungen:
- Me (Ho_{1-x-y} PrₓRE_{y}) F₄ mit Me einem Metall-Ion von Lithium (Li) oder Natrium (Na), mit RE einem lon von Ytterbium (Yb) oder Yttrium (Y), mit F einem Fluor-Ion, mit Anteilen an Praseodym von x = 0,001 bis 0,03 und mit Atomanteilen an Ytterbium (Yb) oder Yttrium (Y) von y = 0,2 bis 0,9 oder
- Ba (Ho_{1-x-y}PrₓRE_{y})₂F₈ mit Ba einem Barium-Ion, mit F einem Fluor-Ion, mit RE einem Ion von Ytterbium (Yb) oder Yttrium (Y), mit Anteilen an Praseodym von x = 0,0005 bis 0,015 und mit Atomanteilen an Ytterbium (Yb) oder Yttrium (Y) von y = 0,1 bis 0,45.

In Ausgestaltungsvarianten dieser Erfindung ist vorgesehen, daß der Kristall des Pumplasers aus neodymdotiertem Yttrium-Lithium-Fluorid YLiF₄:Nd mit der Emissionswellenlänge der Pumplaserstrahlung von 1,047 µm besteht oder daß als Pumplaser eine Laserdiode mit einer Emissionswellenlänge im Bereich 0,93 bis 0,98 µm vorhanden ist.

Der wesentliche Vorteil der Erfindung besteht darin, daß die geometrische Abmessung des Bearbeitungskopfes wesentlich verringert werden kann. Das hat zugleich zur Folge, daß die Kosten für die elektronische Versorgung des Pumplasers drastisch gesenkt werden. Der Aufwand für die Kühlung im Laserkonverter wird ebenfalls verringert bzw. überhaupt unnötig.

Der Einsatz eines solchen Kristalls mit der angegebenen Dotierung bewirkt eine deutliche Verringerung der Leistungsverluste bei der Umsetzung der Pumpstrahlung in die Wirk- bzw. Arbeitsstrahlung der Wellenlänge im 3µm-Bereich. Eine Erklärung besteht darin, daß es auf diese Weise gelungen ist, an den Kristallen mit den angegebenen Zusammensetzungen Me (Ho₁₋ₓPrₓ) F₄ mit Me = Lithium oder Natrium und Me (Ho_{1-x-y}Prₓ Y_{y})₂F₈ mit Me = Barium im Laserkonverter direkte Absorbtionsübergänge des Holmium-lons für die vom Pumplaser emittierte Strahlung zu nutzen. Die Auswahl des Holmium-Fluorids als Grundlage (Hauptbestandteil) für den Laserkonverterkristall hat zur Folge, daß die bei der Rekombination am Holmium entstehende Strahlung im geforderten Bereich 2,9 ± 0,2 µm liegt. Die reale Laserkonverterwellenlänge innerhalb dieses Bereiches stellt sich ein in Abhängigkeit vom Metall-Ion. Die erfindungsgemäß vorgeschlagenen Anteile in der Zusammensetzung des Kristalls gewährleisten einen sehr hohen Energiekonversionskoeffizienten mit einer Energieübertragungsgeschwindigkeit, bei der sich parasitäre Prozesse, die zu Energieverlusten führen, gar nicht erst entwickeln können.

Durch den Einbau von Praseodym in das Kristallgitter wird die Lebensdauer des unteren Niveaus ⁵I₇, des Holmium-Ions verringert, wodurch wiederum die relative Inversions-Besetzungsdichte des Überganges ⁵I₅ - ⁵I₇ erhöht und damit der Wirkungsgrad weiter verbessert wird. Bei einer Praseodym-Konzentration unterhalb einer gewissen Grenze wird dieser Effekt vernachlässigbar, und bei einer Praseodym-Konzentration über 0,03 führt dies zur parasitären Absorption der Strahlung des Pumplasers.

In den Kristallen mit der Zusammensetzung Me (Ho₁₋ₓPrₓ) F₄ mit Me = Lithium oder Natrium und Me (Ho_{1-x-y}PrₓY_{y}) F₄ mit Me = Barium beträgt der Absorbtionskoeffezient etwa 2cm⁻¹. Das gestattet, die Abmessungen des Laser-Konverters bis zu einem Durchmesser von 0,5 bis 1 mm und eine Länge von 4 bis 6 mm zu reduzieren und damit das weite Feld endoskopischer Anwendungen bei für diese Fälle ausreichender Impulsfrequenz und mittlerer Leistung auch im cw- und qcw-Regime zu erschließen.

Um die Energie und Leistung der Strahlung weiter zu erhöhen, wird erfindungsgemäß ein Teil der Holmium-Ionen isomorph durch Yttrium-Ionen ersetzt, die keine Absorption im Bereich von 1,08 bis 1,1 5 µm besitzen. Dadurch wird der Absorptionskoeffizient der Pumplaserstrahlung verringert und es ist die Möglichkeit gegeben, die Länge des Laserkonverters zu erhöhen, dadurch die Wärmeabführung zu verbessern und wiederum den Wirkungsgrad zu erhöhen. Eine Verringerung des Yttrium-Anteiles unter 0,2 bewirkt nur eine vernachlässigbare Verringerung der Absorption der Pumplaserstrahlung, und eine Vergrößerung von y über 0,9 führt zu einer Verringerung des Wirkungsgrades, da die Anzahl der anregbaren Holmium-lonen zu stark reduziert wird.

In den Kristallen der Zusammensetzung Me (Ho_{1-x-y}PrₓY_{y}) F₄ wird ein Teil der Holmium-lonen erfindungsgemäß isomorph durch Ytterbium-lonen ersetzt, die eine gute Absorption im Bereich von 0,93 bis 1,05 µm besitzen, in dem eine Reihe sehr effektiver Pumplaser liegen. Die von Ytterbium-lonen absorbierte Energie wird an die Holmium-lonen übergeben (indirekte Anregung).

In diesem Falle wird der Wirkungsgrad des gesamten Systems Pumplaser-Konverter durch die verfügbaren hocheffektiven Pumplaser für diesen Bereich bestimmt. Eine zu starke Verringerung des Ytterbium-Gehaltes beispielsweise führt zu einer unerwünscht starken Verringerung der Absorbtion der Pumplaserstrahlung. Eine zu weitgehende Erhöhung senkt den Wirkungsgrad des Laserkonverters.

In einer sehr vorteilhaften Ausgestaltung der Erfindung ist vorgesehen, daß der Laserkristall im Laserkonverter an seinem dem Pumplaser zugewandten Ende shparisch gestaltet ist mit einem Krümmungsradius, der im Bereich 0,3 bis 1,5 m liegt und daß auf beiden Enden dieses Laserkristalles Spiegel aufgebracht sind, die einen Laserresonator für den Wellenlangenbereich 3 ± 0,2 µm bilden, wobei der Spiegel auf der dem Pumplaser zugewandten Seite fur den Wellenlängenbereich 3 ± 0,2 µm hochreflektierend und für die Pumplaserstrahlung hochtransmittierend und der auf dem gegenuberliegenden Ende aufgebrachte Spiegel für den Wellenlängenbereich 3 ± 0,2 µm teildurchlässig und für die Pumplaserstrahlung hochtransmittierend gestaltet ist. Damit ist ein noch einfacherer Aufbau des Laserkonverters möglich, der aufgrund der geringen Baugröße leicht im Bearbeitungskopf unterzubringen ist. Der Wirkungsgrad wird außerdem noch erhöht durch die Verringerung parasitärer Verluste fur die 3 µm-Strahlung an den Spiegeln sowie durch Verringerung der Justierempfindlichkeit bei Montage und Betrieb des Lasers.

Alternativ zu den Festkörperlasern, die gemäß obenstehender Darlegung zur Erzeugung einer Pumplaserstrahlung mit den Wellenlängen 1,047µm, 1,08µm und 1,12µm vorgesehen sind, kann die Pumpstrahlung selbstverständlich auch mit laseraktiven Medien in Form von Gasen, Flussigkeiten oder Halbleitern erzeugt und deren Strahlung zur Anregung des Laserkonverters genutzt werden.

### Kurze Beschreibung der Zeichnungen

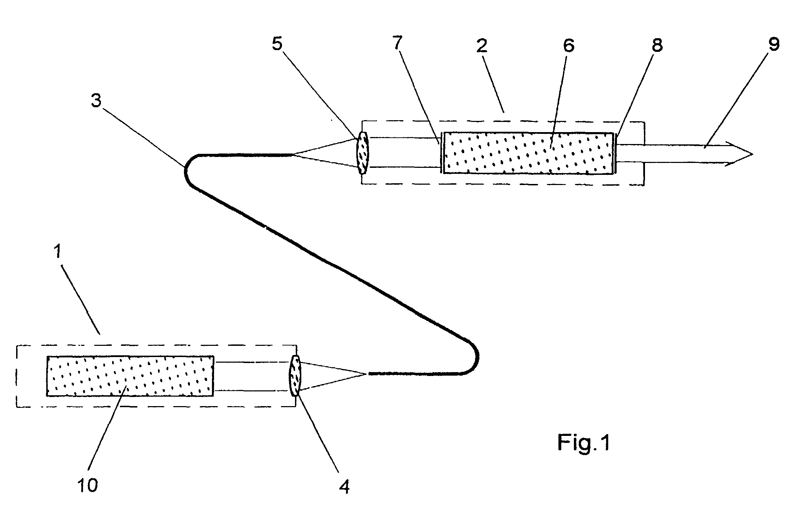

Die Erfindung soll nachfolgend an einem Ausführungsbeispiel näher erläutert werden. Die zugehörige Zeichnung zeigt in Fig.1 den prinzipiellen Aufbau der erfindungsgemäßen Einrichtung.

### Ausführliche Beschreibung der Zeichnung

In Fig.1 sind ein Pumplaser 1 sowie ein Laserkonverter 2 dargestellt, die beide über einen optischen Lichtwellenleiter 3 miteinander verbunden sind. An den Strahlungsübergängen vom Pumplaser 1 zum Lichtwellenleiter 3 ist eine Abbildungsoptik 4 eingefügt; ebenso eine Koppeloptik 5 am Strahlungsübergang vom Lichtwellenleiter 3 zum Laserkonverter 2. Die dem Lichtwellenleiter 3 zugewandte Endfläche des Laserkristalls 6 im Laserkonverter 2, d.h. dessen Einkoppel-Ende, ist verspiegelt ausgeführt, und zwar beispielhaft mit einer ebenen Spiegelfläche 7. Alternativ hierzu kann eine mit einem Radius zwischen 0,3 m und 1,5 m sphärisch gekrümmte Fläche vorteilhaft sein. Analog ist das gegenüberliegende Auskoppel-Ende des Laserkristalles 6 als Spiegelfläche 8 ausgeführt. Beide Spiegelflächen 7, 8 sind jeweils als Schichtsysteme auf den Laserkristall 6 aufgebracht und dienen als Resonatorspiegel. Dabei hat die Spiegelfläche 7 ein hohe Transparenz für die Pumplaserwellenlänge, beispielsweise 1,12 µm, und eine hohe Reflexion für die Wellenlängen 2,8 µm bis 3,1 µm. Die gegenüberliegende Spiegelfläche 8 dagegen, die der Auskopplung der Wirk- bzw. Arbeitsstrahlung 9 dient, ist durch ein für die Wellenlange 2,8 bis 3,1 µm partiell transparentes Schichtsystem gebildet, das zugleich eine hohe Reflexion für die vom Pumplaser ausgehende Strahlung besitzt.

Als Kristall 10 im Pumplaser 1 sei beispielhaft ein neodymdotierter Yttrium-Aluminium-Granat Y₃Al₅O₁₂:Nd mit einer Emissionswellenlange der Pumplaserstrahlung 1,12 µm vorgesehen, als Laserkristall 2 sei ein Mehr-Komponenten-Kristall mit einem Metall-Ion und einem Alkali- oder Erdalkalifluorid mit den Elementen Holmium (Ho) und Praseodym (Pr) vorgesehen, und zwar der Verbindung Ba (Ho₁₋ₓPrₓ)₂ F₈ mit x = 0,0005 bis 0,015.

Mit dieser Einrichtung wird eine einfache Struktur des Laserkonverters als Voraussetzung für eine vorteilhafte konstruktive Gestaltung des Bearbeitungskopfes mit sehr geringer Baugröße erreicht und der Einsatz zur komplizierten Gewebsbehandlung in breiten Anwendungsbereichen ermöglicht.

## Patentansprüche

1. Einrichtung zur Ablation von Material mit Hilfe von Laserstrahlung, insbesondere zur Bearbeitung biologischer Substanzen bei stomatologischer, endoskopischer, dermatologischer, orthorhinologischer und ähnlicher Behandlung, bestehend aus einem Pumplaser (1) zur Erzeugung einer strahlungsanregenden Laserstrahlung und aus einem Laserkonverter (2) zur Umwandlung der Pumplaserstrahlung in eine für die Bearbeitung vorgesehene Laserstrahlung des Wellenlängenbereiches 3 µm ± 0,2 µm, wobei der Laserkonverter (2) in einem örtlich vom Pumplaser getrennten Bearbeitungskopf untergebracht ist und zur Übertragung der Laserstrahlung vom Pumplaser zum Laserkonverter (2) eine faseroptische Einrichtung (3) vorgesehen ist, **dadurch gekennzeichnet, daß** als Laserkristall (6) im Laserkonverter (2) ein Metall-Holmium-Fluorid-Kristall mit einem Alkali- oder Erdalkali-Ion als Metall-Ion bei teilweisem Ersatz der Holmium (Ho)-lonen durch Praseodym (Pr)-Ionen vorgesehen ist, und zwar eine der Verbindungen:
- Me (Ho₁₋ₓPrₓ) F₄ mit Me einem Metall-Ion von Lithium (Li) oder Natrium (Na), mit F einem Fluor-Ion und mit Anteilen an Praseodym von x = 0,001 bis 0,03 oder
- Ba (Ho₁₋ₓ Prₓ)₂ F₈ mit Ba einem Barium-Ion, mit F einem Fluor-Ion und mit Anteilen an Praseodym von x = 0,0005 bis 0,015.

2. Einrichtung zur Ablation von Material mit Hilfe von Laserstrahlung nach Anspruch 1, **dadurch gekennzeichnet, daß** der Kristall (10) des Pumplasers (1) aus neodymdotiertem Yttrium-Aluminium-Granat Y₃Al₅O₁₂:Nd besteht und die Emissionswellenlänge der Pumplaserstrahlung 1,12 µm beträgt.

3. Einrichtung zur Ablation von Material nach Anspruch 1, **dadurch gekennzeichnet, daß** der Kristall (10) des Pumplasers (1) aus neodymdotiertem Yttrium-Orthoaluminat YAlO₃:Nd besteht und die Emissionswellenlänge der Pumplaserstrahlung 1,08 µm beträgt.

4. Einrichtung zur Ablation von Material nach Anspruch 1, **dadurch gekennzeichnet, daß** als Pumplaser (1) eine Laserdiode mit einer Emissionswellenlänge im Bereich 1,1 bis 1,15 µm vorgesehen ist.

5. Einrichtung zur Ablation von Material mit Hilfe von Laserstrahlung nach dem Oberbegriff des Anspruchs 1, **dadurch gekennzeichnet, daß** als Laserkristall (6) im Laserkonverter (2) ein Metall-Holmium-Fluorid-Kristall mit einem Alkali- oder Erdalkali-lon als Metall-Ion bei teilweisem Ersatz der Holmium (Ho)-lonen durch Praseodym (Pr)-lonen und weiterhin bei teilweisem Ersatz der Holmium (Ho)-Ionen durch Ionen der Seltenen Erden Ytterbium (Yb) oder Yttrium (Y) vorgesehen ist, und zwar eine der Verbindungen:
- Me (Ho_{1-x-y} Prₓ RE_{y}) F₄ mit Me einem Metall-Ion von Lithium (Li) oder Natrium (Na), mit RE einem lon von Ytterbium (Yb) oder Yttrium (Y), mit F einem Fluor-Ion, mit Anteilen an Praseodym von x = 0,001 bis 0,03 und mit Anteilen an Ytterbium (Yb) oder Yttrium (Y) von y = 0,2 bis 0,9 oder
- Ba (Ho_{1-x-y}PrₓRE_{y})₂ F₈ mit Ba einem Barium-Ion, mit F einem Fluor-Ion, mit RE einem lon von Ytterbium (Yb) oder Yttrium (Y), mit Anteilen an Praseodym von x = 0,0005 bis 0,015 und mit Anteilen an Ytterbium (Yb) oder Yttrium (Y) von y = 0,1 bis 0,45.

6. Einrichtung zur Ablation von Material nach Anspruch 5, **dadurch gekennzeichnet, daß** der Kristall (10) des Pumplasers (1) aus neodymdotiertem Yttrium-Lithium-Fluorid YLiF₄:Nd besteht und die Emissionswellenlänge der Pumplaserstrahlung 1,047 µm beträgt.

7. Einrichtung zur Ablation von Material nach Anspruch 5, **dadurch gekennzeichnet, daß** als Pumplaser (1) eine Laserdiode mit einer Emissionswellenlänge im Bereich 0,93 bis 0,98 µm vorgesehen ist.

8. Einrichtung zur Ablation von Material mit Hilfe von Laserstrahlung nach einem der vorgenannten Ansprüche, **dadurch gekennzeichnet, daß** der Laserkristall (6) im Laserkonverter (2) an seinem dem Pumplaser (1) zugewandten Ende shparisch gestaltet ist mit einem Krümmungsradius, der im Bereich 0,3 bis 1,5 m liegt und daß auf beiden Enden dieses Laserkristalles (6) Spiegel (7,8) aufgebracht sind, die einen Laserresonator für den Wellenlängenbereich 3 ± 0,2 µm bilden, wobei der Spiegel (7) auf der dem Pumplaser (1) zugewandten Seite für den Wellenlängenbereich 3 ± 0,2 µm hochreflektierend und fur die Pumplaserstrahlung hochtransmittierend und der auf dem gegenüberliegenden Ende aufgebrachte Spiegel (8) für den Wellenlängenbereich 3 ± 0,2 µm teildurchlässig und für die Pumplaserstrahlung hochtransmittierend gestaltet ist.

## Claims

1. Device for the ablation of material with the aid of laser radiation, particularly for the processing of biological substances in stomatological, endoscopic, dermatological, orthorhinological and similar treatment, consisting of a pump laser (1) for the generation of a radiation-exciting laser radiation and a laser converter (2) for the conversion of the pump laser radiation into a laser radiation of the wavelength range 3 µm ± 0.2 µm provided for processing, wherein the laser converter (2) is accommodated in a processing head which is spatially separated from the pump laser and a fibre-optic device (3) is provided for the transmission of the laser radiation from the pump laser to the laser converter (2), **characterised in that** as laser crystal (6) in the laser converter (2) a metal-holmium-fluoride crystal with an alkali ion or alkaline earth ion as metal ion with partial substitution of the holmium (Ho) ions by praseodymium (Pr) ions is provided, namely one of the compounds:
- Me (Ho₁₋ₓPrₓ) F₄ with Me a metal ion of lithium (Li) or sodium (Na), with F a fluorine ion and with fractions of praseodymium of x = 0.001 to 0.03 or
- Ba (Ho₁₋ₓPrₓ)₂ F₈ with Ba a barium ion, with F a fluorine ion and with fractions of praseodymium of x = 0.0005 to 0.015.

2. Device for the ablation of material with the aid of laser radiation as claimed in Claim 1, **characterised in that** the crystal (10) of the pump laser (1) consists of neodymium-doped yttrium-aluminium-garnet Y₃Al₅O₁₂:Nd and the emission wavelength of the pump laser radiation is 1.12 µm.

3. Device for the ablation of material as claimed in Claim 1, **characterised in that** the crystal (10) of the pump laser (1) consists of neodymium-doped yttrium orthoaluminate YAlO₃:Nd and the emission wavelength of the pump laser radiation is 1.08 µm.

4. Device for the ablation of material as claimed in Claim 1, **characterised in that** a laser diode with an emission wavelength in the range from 1.1 to 1.15 µm is provided as pump laser (1).

5. Device for the ablation of material with the aid of laser radiation according to the preamble to Claim 1, **characterised in that** as laser crystal (6) in the laser converter (2) a metal-holmium-fluoride crystal with an alkali ion or alkaline earth ion as metal ion with partial substitution of the holmium (Ho) ions by praseodymium (Pr) ions and also with partial substitution of the holmium (Ho) ions by ions of the rare earths ytterbium (Yb) or yttrium(Y) is provided, namely one of the compounds:
- Me (Ho_{1-x-y}PrₓRE_{y}) F₄ with Me a metal ion of lifflium (Li) or sodium (Na), with RE an ion of ytterbium (Yb) or yttrium (Y), with F a fluorine ion and with fractions of praseodymium of x = 0.001 to 0.03 and with fractions of ytterbium (Yb) or yttrium (Y) of y = 0.2 to 0.9 or
- Ba (Ho_{1-x-y}PrₓRE_{y})₂ F₈ with Ba a barium ion, with F a fluorine ion, with RE an ion of ytterbium (Yb) or yttrium (Y), with fractions of praseodymium of x = 0.0005 to 0.015 and with fractions of ytterbium (Yb) or yttrium (Y) of y = 0.1 to 0.45.

6. Device for the ablation of material as claimed in Claim 5, **characterised in that** the crystal (10) of the pump laser (1) consists of neodymium doped yttrium-lithium-fluoride YLiF₄:Nd and the emission wavelength of the pump laser radiation is 1.047 µm.

7. Device for the ablation of material as claimed in Claim 5, **characterised in that** a laser diode with an emission wavelength in the range 0.93 to 0.98 µm is provided as pump laser (1).

8. Device for the ablation of material with the aid of laser radiation as claimed in one of the preceding claims, **characterised in that** the laser crystal (6) in the laser converter (2) is of spherical shape on its end facing the pump laser (1) and has a radius of curvature in the range 0.3 to 1.5 m, and that reflectors (7, 8) which form a laser resonator for the wavelength range 3 ± 0.2 µm are attached to both ends of this laser crystal (6), wherein the reflector (7) on the side facing the pump laser (1) is highly reflecting for the wavelength range 3 ± 0.2 µm and highly transmitting for the pump laser radiation and the reflector (8) attached to the opposite end is partially permeable for the wavelength range 3 ± 0.2 µm and highly transmitting for the pump laser radiation.

## Revendications

1. Dispositif permettant d'enlever de la matière à l'aide d'un rayonnement laser, notamment pour le traitement de substances biologiques lors d'une intervention stomatologique, endoscopique, dermatologique, othorinologique et intervention similaire, constitué d'un laser de pompage (1) destiné à produire un rayonnement laser déclenchant un rayonnement, ainsi que d'un convertisseur laser (2) pour la conversion du rayonnement laser de pompage en un rayonnement laser d'un ordre de longueur d'onde de 3 µm ± 0,2 µm, prévu pour le traitement, le convertisseur laser (2) étant logé dans une tête de traitement séparée dans l'espace du laser de pompage, et un dispositif (3) à fibres optiques étant prévu pour la transmission du rayonnement laser du laser de pompage au convertisseur laser (2), **caractérisé en ce qu'**il prévu comme cristal laser (6) dans le convertisseur laser (2), un cristal métal-fluorure d'holmium avec un ion alcalin ou alcalino-terreux en tant qu'ion métallique, les ions d'holmium (Ho) étant partiellement remplacés par des ions de praséodyme (Pr), à savoir l'un des composés suivants :
- Me (Ho₁₋ₓPrₓ)F₄ avec Me qui est un ion métallique de lithium (Li) ou de sodium (Na), avec F qui est un ion de fluor et avec des parts de praséodyme de x = 0,001 à 0,03, ou
- Ba (Ho₁₋ₓPrₓ)₂F₈, avec Ba qui un ion de baryum, avec F qui est un ion de fluor et avec des parts de praséodyme x = 0,0005 à 0,015.

2. Dispositif permettant d'enlever de la matière à l'aide d'un rayonnement laser selon la revendication 1, **caractérisé en ce que** le cristal (10) de laser de pompage (1) est constitué de grenat d'yttrium-aluminium dopé au néodyme Y₃Al₅O₁₂:Nd et la longueur d'onde d'émission du rayonnement du laser de pompage est de 1,12 µm.

3. Dispositif permettant d'enlever de la matière selon la revendication 1, **caractérisé en ce que** le cristal (10) du laser de pompage (1) est constitué d'yttrium-orthoaluminate dopé au néodyme YAlO₃:Nd et la longueur d'onde d'émission du rayonnement du laser de pompage est de 1,08 µm.

4. Dispositif permettant d'enlever de la matière selon la revendication 1, **caractérisé en ce qu'**il est prévu comme laser de pompage (1) une diode laser avec une longueur d'onde d'émission comprise entre 1,1 et 1,15 µm.

5. Dispositif destiné à enlever de la matière à l'aide d'un rayonnement laser selon le préambule de la revendication 1, **caractérisé en ce qu'**il est prévu comme cristal laser (6) dans le convertisseur laser (2) un cristal métal-fluorure d'holmium avec un ion alcalin ou alcalino-terreux en tant qu'ion métallique et avec remplacement partiel des ions d'holmium (Ho) par des ions de praséodyme (Pr), et en outre avec remplacement partiel des ions d'holmium (Ho) par des ions des terres rares que sont l'ytterbium (Yb) ou l'yttrium (Y), à savoir l'un des composés suivants:
- Me (Ho_{1-x-y}PrₓRE_{y})F₄ avec Me qui est un ion métallique de lithium (Li) ou de sodium (Na), avec RE qui est un ion d'ytterbium (Yb) ou d'yttrium (Y), avec F qui est un ion de fluor, avec des parts de praséodyme de x = 0,001 à 0,03, et avec des parts d'ytterbium (Yb) ou d'yttrium (Y) de y = 0,2 à 0,9, ou
- Ba (Ho_{1-x-y}PrₓRE_{y})₂F₈, avec Ba qui un ion de baryum, avec F qui est un ion de fluor, avec RE qui est un ion d'ytterbium (Yb) ou d'yttrium (Y), avec des parts de praséodyme x = 0,0005 à 0,015 et des parts d'ytterbium (Yb) ou d'yttrium (Y) de y = 0,1 à 0,45.

6. Dispositif destiné à enlever de la matière selon la revendication 5, **caractérisé en en ce que** le cristal (10) du laser de pompage (1) est constitué de fluorure d'yttrium-lithium dopé au néodyme YLiF₄:Nd et la longueur d'onde d'émission du rayonnement du laser de pompage est de 1,047 µm.

7. Dispositif permettant d'enlever de la matière selon la revendication 5, **caractérisé en ce qu'**il est prévu comme laser de pompage (1) une diode laser avec une longueur d'onde d'émission comprise entre 0,93 et 0,98 µm.

8. Dispositif destiné à enlever de la matière à l'aide d'un rayonnement laser selon l'une des revendications précédentes, **caractérisé en ce que** le cristal laser (6) dans le convertisseur laser (2) est de forme sphérique à son extrémité tournée vers le laser de pompage (1) avec un rayon de courbure qui se situe entre 0,3 et 1,5 m, et **en ce que** sur les deux extrémités de ce cristal laser (6) sont placés des miroirs (7, 8) qui forment un résonateur laser pour la gamme de longueurs d'onde 3 ± 0,2 µm, le miroir (7) étant très réfléchissant sur le côté tourné vers le laser de pompage (1) pour la gamme de longueurs d'onde de 3 ± 0,2 µm, et étant très perméable pour le rayonnement du laser de pompage, et le miroir (8) placé sur l'extrémité opposée étant partiellement perméable pour la gamme de longueurs d'onde de 3 ± 0,2 µm et étant très perméable pour le rayonnement du laser de pompage.
